# EUROPÄISCHE PATENTANMELDUNG

(11) **EP 4 749 208 A1**
(43) Veröffentlichungstag der Anmeldung: **27.05.2026**
(21) Anmeldenummer: 25215472.9
(22) Anmeldetag: 13.11.2025
(51) Int. Cl.: F25B 41/26, F16K 11/00

(54) **WEGEVENTIL FÜR EINE WÄRMEPUMPE UND WÄRMEPUMPE**

(30) Priorität: 25.11.2024 DE 102024134679
(71) Anmelder: Viessmann Holding International GmbH, 35108 Allendorf (Eder) (DE)
(72) Erfinder: STÖCKEL, Christian, 01159 Dresden (DE)
(74) Vertreter: MERH-IP Matias Erny Reichl Hoffmann Patentanwälte PartG mbB

(57) **Zusammenfassung**

Die vorliegende Erfindung betrifft ein Wegeventil (6, 6A) für eine Wärmepumpe zum Heizen und Kühlen eines Gebäudes sowie eine Wärmepumpe mit einem Wegeventil (6, 6A). Das erfindungsgemäße Wegeventil (6) umfasst ein Ventilgehäuse (10) mit einer Vielzahl von Anschlüssen (11, 12, 13, 14); einen Ventilschieber (20) mit einer Vielzahl von Strömungskanälen (21, 22, 23); mindestens einen Elektromagneten (30a) der dazu eingerichtet ist, den Ventilschieber (20) in eine erste Stellung zu bewegen; ein Umschaltelement, das dazu eingerichtet ist, den Ventilschieber (20) in eine zweite Stellung zu bewegen; eine erste Leitung (16a), die eine erste Kammer (15a), welche angrenzend an eine erste Stirnseite (25a) des Ventilschiebers (20) in dem Ventilgehäuse (10) ausgebildet ist, mit einem ersten Anschluss (11) des Ventilgehäuses (10) verbindet; und eine zweite Leitung (16b), die eine zweite Kammer (15b), welche angrenzend an eine zweite Stirnseite (25b) des Ventilschiebers (20) in dem Ventilgehäuse (10) ausgebildet ist, mit einem zweiten Anschluss (12) des Ventilgehäuses verbindet.

## Beschreibung

Die vorliegende Erfindung betrifft ein Wegeventil für eine Wärmepumpe zum Heizen und Kühlen eines Gebäudes sowie eine Wärmepumpe mit einem Wegeventil und ein Verfahren zur Kältemittelkreislaufumkehr mittels eines Wegeventils.

### Hintergrund der Erfindung

Wärmepumpen ermöglichen es, frei verfügbare Energie aus der Umwelt zum Heizen und/oder Kühlen eines Gebäudes zu verwenden und tragen somit zur Reduzierung des CO₂-Ausstoßes im Gebäudesektor bei. Insbesondere kann eine Wärmepumpe sowohl zum Heizen als auch zum Kühlen dienen, indem darin enthaltene Wärmeübertrager sowohl als Verdampfer als auch als Kondensator eingesetzt werden können. Beispielsweise kann mittels Umkehr des Kältemittelkreislaufs ein im Heizbetrieb als Kondensator arbeitender Wärmeübertrager im Kühlbetrieb als Verdampfer fungieren und vice versa, wodurch z.B. ein Sekundärkreislauf des entsprechenden Wärmeübertragers im Heizbetrieb Wärme an das Gebäude abgeben und im Kühlbetrieb Wärme aus dem Gebäude aufnehmen kann.

Eine Umkehr des Kältemittelkreislaufs kann auch eingesetzt werden, um bei einer Luft-Wasser-Wärmepumpe eine Vereisung eines im Heizbetrieb als Verdampfer arbeitenden Wärmeübertragers in einer Außeneinheit der Wärmepumpe zu beseitigen. Diese kann unter entsprechenden Witterungsbedingungen, insbesondere bei Umgebungstemperaturen unterhalb von 7°C bis 10°C auftreten. Die Kältemittelkreislaufumkehr bewirkt in diesem Fall, dass Wärme z.B. aus einem Heiz-/Kühlkreislauf des Gebäudes zum Abtauen des dann als Kondensator arbeitenden Wärmeübertragers bereitgestellt wird.

Zur Kältemittelkreislaufumkehr wird üblicherweise ein 4/2-Wegeventil eingesetzt, das mittels eines Pilotventils betätigt wird.

Beispielsweise zeigt JP 6 261 008 B2 ein 4/2-Wegeventil mit einem zylindrischen Ventilgehäuse und einem Ventilschieber, der verschiebbar in dem Ventilgehäuse angeordnet ist. Das Ventilgehäuse weist auf einer Seite einen Einströmanschluss auf, der mit einer Druckseite eines Kompressors in einem Kältemittelkreislauf verbunden ist. Auf einer radial gegenüberliegenden Seite des Ventilgehäuses sind drei weitere Anschlüsse angeordnet, von denen ein mittlerer dauerhaft mit einer Saugseite des Kompressors verbunden ist. Die beiden äußeren Anschlüsse sind jeweils mit einem ersten bzw. zweiten Wärmeübertrager in dem Kältemittelkreislauf verbunden. In dem Ventilschieber ist eine Bohrung angeordnet mittels derer abhängig von einer Stellung des Ventilschiebers (erste oder zweite Stellung) einer der beiden äußeren Anschlüsse des Ventilgehäuses mit dem mittleren Anschluss verbunden werden kann. Auf diese Weise kann eine Strömungsrichtung des Kältemittels durch die beiden Wärmeübertrager umgekehrt werden. Eine entsprechende Verstellung des Ventilschiebers wird durch ein Pilotventil gesteuert, das als Magnetventil ausgeführt ist. Das Pilotventil ist auf einer Eingangsseite mit der Druckseite des Kompressors verbunden und weist auf einer Ausgangsseite zwei Anschlüsse auf, von denen jeder mit einer Kammer in dem Ventilgehäuse verbunden ist, die an eine Stirnseite des Ventilschiebers angrenzt. Durch eine Bestromung des Pilotventils wird einer der beiden Ausgänge mit der Eingangsseite verbunden, so dass eine der beiden Kammern mit Druck beaufschlagt und der Ventilschieber in die erste oder zweite Stellung verschoben wird.

Bei 4/2-Wegeventile, die wie oben beschrieben mittels eines Pilotventils betätigt werden, muss der Kompressor jedoch jederzeit eine ausreichend hohe Druckdifferenz zwischen Kompressoreingang und -ausgang bereitstellen, um den Ventilschieber von einer Stellung in die andere zu bewegen. Wenn dies nicht der Fall ist, kann es vorkommen, dass der Ventilschieber nicht vollständig verschoben wird, so dass die gewünschten Anschlüsse nicht oder nur teilweise miteinander verbunden werden. Dies kann zu erheblichen Störungen im Betrieb des Kältemittelkreislaufs führen.

Eine Aufgabe der vorliegenden Erfindung ist es, die oben beschriebenen Nachteile zu überwinden und ein Wegeventil bereitzustellen, das jederzeit eine zuverlässige Verstellung des Ventilschiebers in eine gewünschte Position gewährleistet.

Zur Lösung der Aufgaben werden die Merkmale der unabhängigen Ansprüche vorgeschlagen. Vorteilhafte Ausgestaltungen finden sich in den abhängigen Ansprüchen.

### Offenbarung der Erfindung

Eine erfindungsgemäße Wärmepumpe zum Heizen und Kühlen eines Gebäudes umfasst einen Kältemittelkreislauf mit einem ersten Wärmeübertrager, einem Kompressor, einem zweiten Wärmeübertrager, einem Expansionselement und einem erfindungsgemäßen Wegeventil wie nachfolgend beschrieben.

Die Wärmepumpe kann insbesondere als Luft-Wasser-Wärmepumpe ausgeführt sein. Der erste Wärmeübertrager des Kältemittelkreislaufs kann Umgebungsluft als Wärmequelle und Wärmesenke nutzen, während der zweite Wärmeübertrager einen Heiz-/Kühlkreislauf des Gebäudes als Wärmequelle und Wärmesenke nutzen kann. Der erste Wärmeübertrager kann insbesondere ein Lamellen-Wärmeübertrager sein, und der zweite Wärmeübertrager kann beispielsweise ein Platten-Wärmeübertrager sein, dessen Sekundärseite mit dem Heiz-/Kühlkreislauf des Gebäudes verbunden ist. Die Luft-Wasser-Wärmepumpe kann insbesondere in Monoblock-Bauweise ausgeführt sein, bei der sich der erste und zweite Wärmeübertrager in einer Einheit befinden. Die Einheit kann innerhalb des Gebäudes oder bevorzugt außerhalb des Gebäudes angeordnet sein.

Es ist ebenso möglich, dass die Wärmepumpe als Luft-Luft-Wärmepumpe ausgeführt ist. In diesem Fall kann der erste Wärmeübertrager z.B. in einer Außeneinheit angeordnet sein und Umgebungsluft als Wärmequelle und Wärmesenke nutzen. Der zweite Wärmeübertrager kann z.B. in einer Inneneinheit eingeordnet sein und Raumluft des Gebäudes als Wärmequelle und Wärmesenke nutzen. Insbesondere kann die Inneneinheit als Gebläsekonvektor (Fan Coil) ausgebildet sein.

Zum Heizen des Gebäudes (Heizbetrieb der Wärmepumpe) kann der erste Wärmeübertrager als Verdampfer und der zweite Wärmeübertrager als Kondensator fungieren, und zum Kühlen des Gebäudes (Kühlbetrieb der Wärmepumpe) kann der zweite Wärmeübertrager als Verdampfer und der erste Wärmeübertrager als Kondensator fungieren. Um von einem Heizbetrieb in einen Kühlbetrieb der Wärmepumpe umzuschalten und vice versa, kann das Wegeventil eine Strömungsrichtung des Kältemittelkreislaufs umschalten. Des Weiteren kann das Wegeventil die Strömungsrichtung des Kältemittelkreislaufs umschalten, um ein Abtauen des ersten Wärmeübertragers zu bewirken.

Der Kompressor des Kältemittelkreislaufs kann zwischen dem ersten Wärmeübertrager und dem zweiten Wärmeübertrager angeordnet sein, während das Expansionselement zwischen dem zweiten Wärmeübertrager und dem ersten Wärmeübertrager angeordnet sein kann. Mit anderen Worten kann im Heizbetrieb der Wärmepumpe der Kompressor stromabwärts des ersten Wärmeübertragers und stromaufwärts des zweiten Wärmeübertragers angeordnet sein, und das Expansionselement kann stromabwärts des zweiten Wärmeübertragers und stromaufwärts des ersten Wärmeübertragers angeordnet sein. Im Kühlbetrieb kann hingegen der Kompressor stromabwärts des zweiten Wärmeübertragers und stromaufwärts des ersten Wärmeübertragers und das Expansionselement stromabwärts des ersten Wärmeübertragers und stromaufwärts des zweiten Wärmeübertragers angeordnet sein. Der Kompressor kann insbesondere ein drehzahlvariabler Kompressor sein, und das Expansionselement kann ein thermostatisches oder elektronisches Expansionsventil sein.

Die Funktion des oben beschriebenen Kältemittelkreislaufs mit den genannten Komponenten wird nachfolgend in Verbindung mit den Figuren näher erläutert.

Das erfindungsgemäße Wegeventil für eine Wärmepumpe zum Heizen und Kühlen eines Gebäudes, wie oben beschrieben, umfasst ein Ventilgehäuse mit einer Vielzahl von Anschlüssen sowie einen Ventilschieber mit einer Vielzahl von Strömungskanälen, der axial beweglich in dem Ventilgehäuse angeordnet ist. Der Begriff "axial" soll vorliegend eine Richtung entlang bzw. parallel zu einer Mittelachse des Wegeventils bezeichnen, während der Begriff "*radial*" eine Richtung senkrecht zu der Mittelachse bezeichnen soll. Die Vielzahl von Anschlüssen kann auf einer äußeren Oberfläche des Ventilgehäuses angeordnet sein und jeder Anschluss kann eine Öffnung enthalten, die mit einem Querschnitt eines der Vielzahl von Strömungskanälen in Überdeckung gebracht werden kann, um Kältemittel durch das Wegeventil zu leiten.

Gemäß einer Ausführungsform kann der Ventilschieber drei Strömungskanäle aufweisen. In diesem Fall kann das Ventilgehäuse zweckmäßigerweise mindestens vier Anschlüsse aufweisen, von denen ein erster Anschluss mit dem zweiten Wärmeübertrager und ein zweiter Anschluss mit dem ersten Wärmeübertrager des Kältemittelkreislaufs der Wärmepumpe verbunden werden kann.

Gemäß einer Ausführungsform kann ein dritter Anschluss des Ventilgehäuses mit einer Hochdruckseite und ein vierter Anschluss des Ventilgehäuses mit einer Niederdruckseite der Wärmepumpe verbindbar sein. Mit anderen Worten kann der dritte Anschluss mit einem Ausgang bzw. einer Druckseite des Kompressors und der vierte Anschluss mit einem Eingang bzw. einer Saugseite des Kompressors verbunden werden. Insbesondere können der dritte und der vierte Anschluss radial gegenüberliegend auf der äußeren Oberfläche des Ventilgehäuses angeordnet sein. Von den drei Strömungskanälen des Ventilschiebers können zwei dazu dienen, den ersten bzw. zweiten Wärmeübertrager mit der Hochdruckseite der Wärmepumpe zu verbinden, während einer dazu genutzt werden kann, den anderen der beiden Wärmeübertrager mit der Niederdruckseite der Wärmepumpe zu verbinden. Dazu können der erste und zweite Anschluss jeweils in axialer Richtung neben dem vierten Anschluss angeordnet sein. Insbesondere kann sich der vierte Anschluss zwischen dem ersten und zweiten Anschluss befinden.

In einer Ausführungsform kann der Ventilschieber als Kolbenschieber ausgeführt sein, in dessen zylindrischem Körper z.B. die drei Strömungskanäle ausgebildet sein können. In diesem Fall kann das Ventilgehäuse zweckmäßigerweise einen Zylinder aufweisen, in dem der Kolbenschieber in axialer Richtung verschiebbar ist. Alternativ kann der Ventilschieber als Muschelschieber, wie z.B. in JP 6 261008 B2 gezeigt, ausgeführt sein.

Dazu enthält das Wegeventil mindestens einen Elektromagneten, der dazu eingerichtet ist, den Ventilschieber in eine erste Stellung zu bewegen. Der Elektromagnet weist einen Magnetanker auf, der mit dem Ventilschieber mechanisch wirkverbunden ist. Zudem kann der Elektromagnet eine Magnetspule umfassen, die den Magnetanker zumindest teilweise umgibt. Dabei kann der Magnetanker des Elektromagneten mit dem Ventilschieber derart mechanisch wirkverbunden sein, dass eine Bestromung der Magnetspule zu einer axialen Bewegung bzw. axialen Verschiebung des Ventilschiebers in die erste Stellung in dem Ventilgehäuse führt. Beispielsweise kann die Bestromung der Magnetspule eine axiale Bewegung des Magnetankers auslösen, der daraufhin in mechanischen Kontakt mit dem Ventilschieber treten und dessen axiale Bewegung bewirken kann. Der Elektromagnet kann dazu beispielsweise an einer ersten Stirnseite des zylindrischen Ventilgehäusekörpers angeordnet sein und sein Magnetanker kann an eine erste Stirnseite des Ventilschiebers angrenzen. Es ist ebenso möglich, dass der Magnetanker mechanisch mit der ersten Stirnseite des Ventilschiebers verbunden ist. z.B. mittels einer Verschraubung oder einer Verschweißung. Alternativ können der Magnetanker und der Ventilschieber einstückig ausgeführt sein.

Gemäß einer Ausführungsform kann der Ventilschieber in der ersten Stellung dazu eingerichtet sein, den ersten Anschluss des Ventilgehäuses mit einer Hochdruckseite und den zweiten Anschluss des Ventilgehäuses mit einer Niederdruckseite der Wärmepumpe zu verbinden. Insbesondere können in der ersten Stellung des Ventilschiebers dessen Strömungskanäle derart angeordnet sein, dass ein Ausgang des ersten Wärmeübertragers über den zweiten und vierten Anschluss des Ventilgehäuses mit dem Eingang des Kompressors verbunden ist, und der Ausgang des Kompressors über den dritten und ersten Anschluss des Ventilgehäuses mit einem Eingang des zweiten Wärmeübertragers verbunden ist.

Zudem weist das Wegeventil ein Umschaltelement auf, das dazu eingerichtet ist, den Ventilschieber in eine zweite Stellung zu bewegen. Gemäß einer Ausführungsform kann der Ventilschieber in der zweiten Stellung dazu eingerichtet sein, den ersten Anschluss des Ventilgehäuses mit der Niederdruckseite und den zweiten Anschluss des Ventilgehäuses mit der Hochdruckseite der Wärmepumpe zu verbinden. Insbesondere können in der zweiten Stellung des Ventilschiebers dessen Strömungskanäle derart angeordnet sein, dass der Ausgang des Kompressors über den dritten und zweiten Anschluss des Ventilgehäuses mit einem Eingang des ersten Wärmeübertragers verbunden ist, und ein Ausgang des zweiten Wärmeübertragers über den ersten und vierten Anschluss des Ventilgehäuses mit dem Eingang des Kompressors verbunden ist. Da eine Bewegung des Ventilschiebers von der ersten in die zweite Stellung eine Strömungsumkehr des Kältemittels bewirkt, kann es sich bei dem Eingang und Ausgang des ersten und zweiten Wärmeübertragers jeweils um einen gleichen Anschluss handeln, der in einem Fall als Eingang und im anderen Fall als Ausgang dient.

Gemäß einer Ausführungsform kann das Umschaltelement einen Elektromagneten umfassen. Insbesondere kann das Wegeventil einen zweiten Elektromagneten mit einer Magnetspule und einem Magnetanker enthalten, der axial gegenüber von dem ersten Elektromagneten, z. B. an einer zweiten Stirnseite des zylindrischen Ventilgehäusekörpers, angeordnet sein kann. Der Magnetanker des zweiten Elektromagneten kann in diesem Fall derart mit dem Ventilschieber mechanisch wirkverbunden sein, dass eine Bestromung der Magnetspule zu einer axialen Bewegung bzw. axialen Verschiebung des Ventilschiebers in die zweite Stellung in dem Ventilgehäuse führt. Beispielsweise kann die Bestromung der Magnetspule eine axiale Bewegung des Magnetankers auslösen, der daraufhin in mechanischen Kontakt mit dem Ventilschieber treten und dessen axiale Bewegung bewirken kann. Es ist ebenso möglich, dass der Magnetanker mechanisch mit dem Ventilschieber verbunden ist. z.B. mittels einer Verschraubung oder einer Verschweißung. Alternativ können der Magnetanker und der Ventilschieber einstückig ausgeführt sein.

Die axiale Bewegung, die den Ventilschieber in die zweite Stellung bewegt, kann entgegengesetzt zu der axialen Bewegung, die den Ventilschieber in die erste Stellung bewegt, verlaufen.

Alternativ oder zusätzlich kann das Umschaltelement mindestens eine Feder umfassen, welche an eine zweite Stirnseite des Ventilschiebers angrenzt, die dessen erster Stirnseite axial gegenüberliegt. Die mindestens eine Feder kann den Ventilschieber in die zweite Stellung bewegen, wenn der erste gegenüberliegende Elektromagnet ausgeschaltet und eine auf die erste Stirnseite wirkende Druckkraft kleiner als eine Federkraft der Feder ist. Bei der mindestens einen Feder kann es sich insbesondere um eine Schraubenfeder handeln. Es ist ebenso möglich, dass mehrere Federn als Umschaltelement zum Einsatz kommen.

In dem Ventilgehäuse ist angrenzend an die erste Stirnseite des Ventilschiebers eine erste Kammer und angrenzend an die zweite Stirnseite des Ventilschiebers eine zweite Kammer ausgebildet. Dabei ist die erste Kammer über eine erste Leitung mit dem ersten Anschluss des Ventilgehäuses verbunden, und die zweite Kammer ist über eine zweite Leitung mit dem zweiten Anschluss des Ventilgehäuses verbunden. Die erste und zweite Leitung können z.B. als Kapillarrohre ausgeführt sein. Auf diese Weise wirkt ein an dem ersten Anschluss anliegender Druck auf die erste Stirnseite (erste Steuerfläche) des Ventilschiebers in der ersten Kammer und ein an dem zweiten Anschluss anliegender Druck auf die zweite Stirnseite (zweite Steuerfläche) des Ventilschiebers in der zweiten Kammer.

In einer Ausführungsform können an dem Ventilschieber eine oder mehrere Dichtungen angeordnet sein, welche die erste und zweite Kammer in dem Ventilgehäuse abdichten. Zweckmäßigerweise kann z.B. jeweils auf einem Umfang des Ventilschiebers, der an eine von dessen Stirnseiten angrenzt bzw. anschließt, mindestens eine radiale Dichtung angebracht sein. Es ist ebenso möglich, dass die erste und zweite Kammer mittels mindestens einer axial angeordneten Dichtung in dem Gehäuse abgedichtet sind. Zusätzlich können die einzelnen Strömungskanäle mit Dichtungen versehen sein, um diese nochmals separat in dem Gehäuse abzudichten.

In der ersten Stellung des Ventilschiebers ist der erste Anschluss des Ventilgehäuses mit der Hochdruckseite und der zweite Anschluss des Ventilgehäuses mit der Niederdruckseite der Wärmepumpe verbunden. Demzufolge liegt in dieser Stellung ein Hochdruck in der ersten Kammer und ein Niederdruck in der zweiten Kammer vor, so dass der Ventilschieber durch das vorliegende Druckgefälle in der ersten Stellung gehalten wird. Somit muss der Elektromagnet nur zu Verstellung des Ventilschiebers eingeschaltet/aktiviert werden und kann abgeschaltet/deaktiviert werden, sobald der Ventilschieber die erste Stellung erreicht hat.

In der zweiten Stellung des Ventilschiebers ist der erste Anschluss des Ventilgehäuses mit der Niederdruckseite und der zweite Anschluss des Ventilgehäuses mit der Hochdruckseite der Wärmepumpe verbunden. Folglich liegt in dieser Stellung ein Hochdruck in der zweiten Kammer und ein Niederdruck in der ersten Kammer vor, wodurch der Ventilschieber in der zweiten Stellung gehalten wird. In diesem Fall muss das Umschaltelement nur so lange aktiv sein, bis der Ventilschieber die zweite Stellung erreicht hat. Wenn ein zweiter Elektromagnet als Umschaltelement verwendet wird, so kann dieser nur für eine Dauer eines Verstellwegs des Ventilschiebers eingeschaltet/aktiviert werden. Wird eine Feder als Umschaltelement verwendet, so ist deren Federkraft ebenfalls nur für den Verstellweg des Ventilschiebers erforderlich, da das Druckgefälle zwischen den beiden Kammern den Ventilschieber nachfolgend in der zweiten Stellung hält. Insbesondere kann die Federkraft bereits während des Verstellvorgangs durch eine Druckkraft in der zweiten Kammer unterstützt werden, sobald ein Teil eines Querschnitts des entsprechenden Strömungskanals durch eine Öffnung des zweiten und dritten Anschlusses freigegeben wird.

Auf diese Weise kann eine Strömungsrichtung in einem Kältemittelkreislauf einer Wärmepumpe zum Heizen und Kühlen eines Gebäudes zuverlässig umgeschaltet werden, wenn ein Bedarf zur Strömungsrichtungsumkehr detektiert wird. Des Weiteren kann eine Position des Ventilschiebers nur durch das Druckgefälle zwischen Hochdruck- und Niederdruckseite der Wärmepumpe aufrecht erhalten werden, insbesondere muss dazu keine zusätzliche elektrische Energie z.B. zum Betätigen eines Pilotventils, aufgebracht werden. Die Verwendung eines Elektromagneten mit einem Magnetanker, der mit dem Ventilschieber mechanisch wirkverbunden ist, ermöglicht es zudem, das Wegeventil auch bei stillstehendem Kompressor zu schalten. Dies kann beispielsweise bei intermittierendem Betrieb der Wärmepumpe im Sommer von Vorteil sein, wenn diese z.B. nur zeitweise zum Kühlen und zur Warmwasserbereitung genutzt wird. In diesem Fall kann das Wegeventil bereits vor Einschalten des Kompressors in die gewünschte Position gebracht werden, wodurch eine Aktivierung des Kältemittelkreislaufs beschleunigt werden kann.

Gemäß einer weiteren Ausführungsform können in dem Ventilgehäuse mindestens zwei Ventilschieber angeordnet sein. Diese können insbesondere identisch ausgeführt sein und z.B. jeweils drei Strömungskanäle wie oben beschrieben umfassen. In diesem Fall kann das Ventilgehäuse zweckmäßigerweise mindestens acht Anschlüsse aufweisen. Insbesondere können jedem Ventilschieber mit drei Strömungskanälen jeweils vier Anschlüsse zugeordnet sein, die wie oben beschrieben auf der äußeren Oberfläche des Ventilgehäuses angebracht sein können. Die beiden Ventilschieber können beispielsweise dazu eingerichtet sein, eine Strömungsrichtung in einem Kältemittelkreislauf mit zweistufiger Verdichtung und Zwischenkühler umzuschalten. Dies wird nachfolgend in Verbindung mit den Figuren näher erläutert. Insbesondere können die beiden Ventilschieber auch zur Umschaltung eines Kältemittelkreislaufes wie in EP 24 15 4257 beschrieben dienen, dessen Expansionsstrecke sowohl im Heizbetrieb als auch im Kühlbetrieb in gleicher Richtung durchströmt wird. Der Gegenstand der Patentanmeldung EP 24 15 4257 wird hiermit vollständig durch Bezugnahme aufgenommen.

Die mindestens zwei Ventilschieber können insbesondere eine gemeinsame Mittelachse aufweisen und jeweils mit einer ihrer Stirnseiten aneinander angrenzen. Mit anderen Worten können die mindestens zwei Ventilschieber in einem Längsschnitt durch das Wegeventil direkt nebeneinander angeordnet sein. Bei Verwendung von zwei Ventilschiebern kann eine jeweils andere Stirnseite des jeweiligen Ventilschiebers an den Magnetanker des Elektromagneten bzw. an das Umschaltelement angrenzen. Insbesondere können die mindestens zwei Ventilschieber von einem gemeinsamen Elektromagneten in die erste Stellung und von einem gemeinsamen Umschaltelement in die zweite Stellung bewegt werden.

Gemäß einer Ausführungsform können die Strömungskanäle der mindestens zwei Ventilschieber mittels mindestens einer Dichtung fluidisch voneinander getrennt sein. Dazu kann beispielsweise an mindestens einem Umfang des Ventilschiebers, der an die beiden aneinander angrenzenden Stirnseiten anschließt, mindestens eine radiale Dichtung angebracht sein. Es ist ebenso möglich, dass die Strömungskanäle der mindestens zwei Ventilschieber mittels mindestens einer axial angeordneten Dichtung fluidisch voneinander getrennt sind. Zusätzlich können die einzelnen Strömungskanäle mit Dichtungen versehen sein, um diese nochmals separat in dem Gehäuse abzudichten.

In einer Ausführungsform können die mindestens zwei Ventilschieber miteinander verbunden sein. Beispielsweise können die Ventilschieber miteinander verschraubt, verklebt, verschweißt, verpresst oder in jeder anderen geeigneten Form miteinander verbunden sein.

Insbesondere können die mindestens zwei Ventilschieber als ein gemeinsames Bauteil ausgeführt sein. In diesem Fall können die Ventilschieber zweckmäßigerweise einstückig gefertigt sein. Die Anordnung von mindestens zwei Ventilschiebern in einem Ventilgehäuse ermöglicht es, mehrere Ventilfunktionen mit nur einem Steuermechanismus (Elektromagnet und Umschaltelement) bereitzustellen. Auf diese Weise ist z.B. kann z.B. eine Strömungsrichtung eines Kältemittelkreislaufs mit zweistufiger Aufladung und Zwischenkühlung zuverlässig und effizient umgekehrt werden. Alternativ kann das Wegeventil mit zwei Ventilschiebern auch dazu genutzt werden, einen Kältemittelkreislauf wie in EP 24 15 4257 beschrieben umzuschalten, dessen Expansionsstrecke sowohl im Heizbetrieb als auch im Kühlbetrieb in gleicher Richtung durchströmt wird.

### Kurzbeschreibung der Figuren

Figur 1 zeigt schematisch einen Kältemittelkreislauf einer Wärmepumpe zum Heizen und Kühlen eines Gebäudes in dem ein erfindungsgemäßes Wegeventil zum Einsatz kommen kann.
Figur 2 zeigt ein Wegeventil gemäß einem Ausführungsbeispiel der Erfindung in einer schematischen Längsschnittdarstellung.
Figur 3 zeigt ein Wegeventil gemäß einem weiteren Ausführungsbeispiel der Erfindung in einer schematischen Längsschnittdarstellung.
Figur 4a zeigt schematisch einen Strömungsverlauf durch das Wegeventil aus Figur 2, wenn sich dessen Ventilschieber in einer ersten Stellung befindet.
Figur 4b zeigt schematisch einen Strömungsverlauf durch das Wegeventil aus Figur 2, wenn sich dessen Ventilschieber in einer zweiten Stellung befindet.
Figur 5 zeigt ein Wegeventil gemäß einem weiteren Ausführungsbeispiel der Erfindung in einer schematischen Längsschnittdarstellung.
Figur 6a zeigt schematisch Strömungsverläufe durch das Wegeventil aus Figur 5, wenn sich dessen Ventilschieber in der ersten Stellung befinden.
Figur 6b zeigt schematisch Strömungsverläufe durch das Wegeventil aus Figur 5, wenn sich dessen Ventilschieber in der zweiten Stellung befinden.

### Detaillierte Beschreibung bevorzugter Ausführungsbeispiele

Im Folgenden werden Ausführungsbeispiele der vorliegenden Erfindung anhand beispielhafter Figuren detailliert beschrieben. Die Merkmale der Ausführungsbeispiele sind im Ganzen oder teilweise kombinierbar und die vorliegende Erfindung ist nicht auf die beschriebenen Ausführungsbeispiele beschränkt. In den Figuren sind gleiche oder ähnliche Elemente mit gleichen Bezugszeichen versehen, so dass auf eine wiederholte Beschreibung der Elemente verzichtet wird, sofern dies nicht notwendig ist.

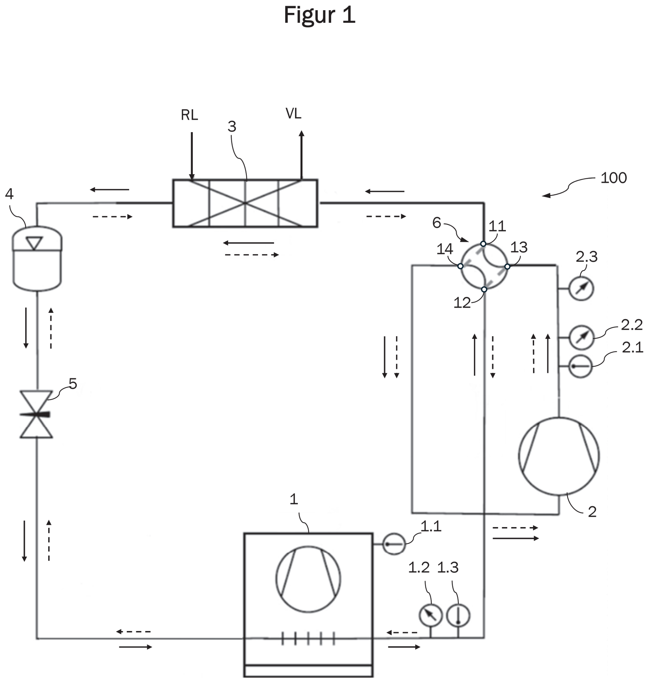

Figur 1 zeigt schematisch einen Kältemittelkreislauf 100 einer Wärmepumpe zum Heizen und Kühlen eines Gebäudes gemäß einem Ausführungsbespiel der Erfindung.

Der Kältemittelkreislauf 100 enthält einen ersten Wärmeübertrager 1, einen Kompressor 2, ein Wegeventil 6, das vorliegend als 4/2-Wegeventil ausgeführt ist, einen zweiten Wärmeübertrager 3, einen Kältemittelsammler 4, und ein Expansionselement 5, das vorliegend als Expansionsventil ausgeführt ist. Die einzelnen Komponenten des Kältemittelkreislaufs 100 sind mit nicht näher bezeichneten Kältemittelleitungen verbunden, wobei eine Strömungsrichtung in dem Kältemittelkreislauf 100 zum Heizen des Gebäudes (Heizbetrieb der Wärmepumpe) mit durchgezogenen Pfeilen und eine Strömungsrichtung zum Kühlen des Gebäudes (Kühlbetrieb der Wärmepumpe) mit gestrichelten Pfeilen gekennzeichnet ist. Im Heizbetrieb der Wärmepumpe fungiert der erste Wärmeübertrager 1 als Verdampfer und der zweite Wärmeübertrager 3 als Kondensator, und im Kühlbetrieb der Wärmepumpe kehren sich die Funktionen des ersten und zweiten Wärmeübertragers um.

In dem ersten Wärmeübertrager 1 ist ein Temperatursensor 1.1 angebracht, und ein weiterer Temperatursensor 1.3 sowie ein Drucksensor 1.2 sind zwischen dem ersten Wärmeübertrager und dem Kompressor 2 angeordnet. Stromaufwärts des Verdichters 2 sind ein weiterer Temperatursensor 2.1 sowie ein weiterer Drucksensor 2.2 sowie ein Sicherheitshochdruckschalter 2.3 angeordnet. Die dargestellten Temperatur- und Drucksensoren können in bekannter Weise zur Steuerung/Regelung und Überwachung des Expansionselements 5 und des Kompressors 2 im Heiz- und Kühlbetrieb der Wärmepumpe verwendet werden.

In einem Heizbetrieb der Wärmepumpe strömt gasförmiges Kältemittel entlang der durchgezogenen Pfeile von dem ersten Wärmeübertrager 1, in dem es Wärme aus der Umgebungsluft aufgenommen hat, über das Wegeventil 6, zu dem Kompressor 2.

Das Wegeventil 6 weist vorliegend vier Anschlüsse 11, 12, 13, 14 und zwei unterschiedliche Stellungen auf, deren zugehörige Strömungspfade durch zwei durchgezogene und zwei gestrichelte Linien gekennzeichnet sind. Ein erster Anschluss 11 des Wegeventils 6 ist mit dem zweiten Wärmeübertrager 3 und ein zweiter Anschluss 12 des Wegeventils 6 ist mit dem ersten Wärmeübertrager 1 verbunden. Des Weiteren ist ein dritter Anschluss 13 des Wegeventils 6 mit einem Ausgang bzw. einer Druckseite des Kompressors und ein vierter Anschluss 14 des Wegeventils 6 mit einem Eingang bzw. einer Saugseite des Kompressors 2 verbunden. Im Heizbetrieb der Wärmepumpe befindet sich das Wegeventil 6 in einer ersten Stellung, in der es entlang der beiden durchgezogenen Pfade von dem Kältemittel durchströmt wird (von dem zweiten Anschluss 12 zu dem vierten Anschluss 14 sowie von dem dritten Anschluss 13 zu dem ersten Anschluss 11).

In dem Kompressor wird das Kältemittel verdichtet und strömt als Heißgas aus dem Kompressor 2 über das Wegeventil 6 in den zweiten Wärmeübertrager 3. In diesem wird das Kältemittel verflüssigt und gibt dabei die im ersten Wärmeübertrager 1 aufgenommene Wärme an einen Heiz-/Kühlkreislauf des Gebäudes ab (siehe Pfeile VL, RL die einen Vorlauf und einen Rücklauf des Heiz-/ Kühlkreislaufs andeuten). Es ist ebenso möglich, dass der zweite Wärmeübertrager 3 die im ersten Wärmeübertrager 1 aufgenommene Wärme mittels eines Ventilators direkt an Raumluft im Gebäude abgibt. Das kondensierte Kältemittel gelangt dann von dem zweiten Wärmeübertrager 3 in den Kältemittelsammler 4 und von dort zu dem Expansionselement 5. Der Kältemittelsammler 4 trennt mittels Schwerkraft eine flüssige Phase des zweiphasig aus dem zweiten Wärmeübertrager 3 austretenden Kältemittels von einer gasförmigen Phase und stellt damit sicher, dass nur flüssiges Kältemittel in das Expansionselement 5 gelangt. Mittels des Expansionselements 5 wird das flüssige Kältemittel auf einen Ausgangsdruck entspannt, so dass es im ersten Wärmeübertrager 1 wieder in einen gasförmigen Zustand übergehen und dabei Wärme aufnehmen kann.

Zur Umkehrung des Kältemittelkreislaufs 100 kann das Wegeventil 6 in eine zweite Stellung umgeschaltet werden, in der es entlang der gestrichelt gekennzeichneten Pfade von dem Kältemittel durchströmt wird (von dem ersten Anschluss 11 zu dem vierten Anschluss 14 sowie von dem dritten Anschluss 13 zu dem zweiten Anschluss 12). Diese Stellung nimmt das Wegeventil 6 beispielsweise im Kühlbetrieb der Wärmepumpe ein, in dem der zweite Wärmeübertrager 3 als Verdampfer und der erste Wärmeübertrager 1 als Kondensator arbeitet. Zudem kann eine Umkehrung des Kältemittelkreislaufs 100 durchgeführt werden, wenn eine Vereisung des ersten Wärmeübertragers 1 im Heizbetrieb detektiert wird. Eine Vereisung kann z.B. basierend auf einer Temperatur in dem ersten Wärmeübertrager 1 detektiert werden, die mit z.B. dem Temperatursensor 1.1 gemessenen werden kann. Zusätzlich zu der Temperaturmessung kann zur Detektion einer Vereisung ein Druck zwischen dem ersten Wärmeübertrager 1 und dem Kompressor 2 mittels des Drucksensors 1.2 gemessen werden.

Bei Umkehrung des Kältemittelkreislaufs, z.B. im Kühlbetrieb der Wärmepumpe, strömt gasförmiges Kältemittel entlang der gestrichelten Pfeile von dem zweiten Wärmeübertrager 3, in dem es Wärme aus dem Heiz-/Kühlsystem des Gebäudes aufgenommen hat, über das Wegeventil 6, zu dem Kompressor 2. In dem Kompressor 2 wird das Kältemittel verdichtet und strömt dann als Heißgas über das Wegeventil 6 in den ersten Wärmeübertrager 1. In dem ersten Wärmeübertrager 1 wird das Kältemittel verflüssigt und gibt dabei die im zweiten Wärmeübertrager 3 aufgenommene Wärme an die Umgebungsluft ab. Das flüssige Kältemittel strömt nachfolgend zu dem Expansionselement 5 und wird dort auf einen Ausgangsdruck entspannt, so dass es im zweiten Wärmeübertrager 3 wieder in einen gasförmigen Zustand übergehen und dabei Wärme aufnehmen kann.

Bekannte Wegeventil zur Umkehrung eines Kältemittelkreislaufs 100, wie oben beschrieben, enthalten üblicherweise ein Pilotventil, mit dem zwischen verschiedenen Strömungskanälen innerhalb des Wegeventils umgeschaltet werden kann. Dazu kann das Wegeventil einen Ventilschieber umfassen, der mittels einer Druckbeaufschlagung auf eine jeweilige Steuerfläche von der ersten in die zweite Stellung verschoben werden kann, um unterschiedliche Strömungskanale freizugeben. Bei dem Pilotventil kann es sich insbesondere um ein Magnetventil handeln, das einen Steuerkältemittelstrom aus einer Hochdruckleitung nach dem Kompressor 2 zu der jeweiligen Steuerfläche des Ventilschiebers leitet.

Solche Wegeventile haben jedoch den Nachteil, dass bei zu niedriger Druckdifferenz zwischen einem Eingang und einem Ausgang des Kompressors 2 der Ventilschieber nicht oder nicht vollständig verschoben wird und die Strömungskanäle folglich nicht oder nicht vollständig geöffnet werden. Nachfolgend werden Ausführungsbeispiele eines erfindungsgemäßen Wegeventils 6 beschrieben, mit dem eine vollständige Verschiebung des Ventilschiebers unabhängig von dem Druck im Kältemittelkreislauf durchgeführt werden kann.

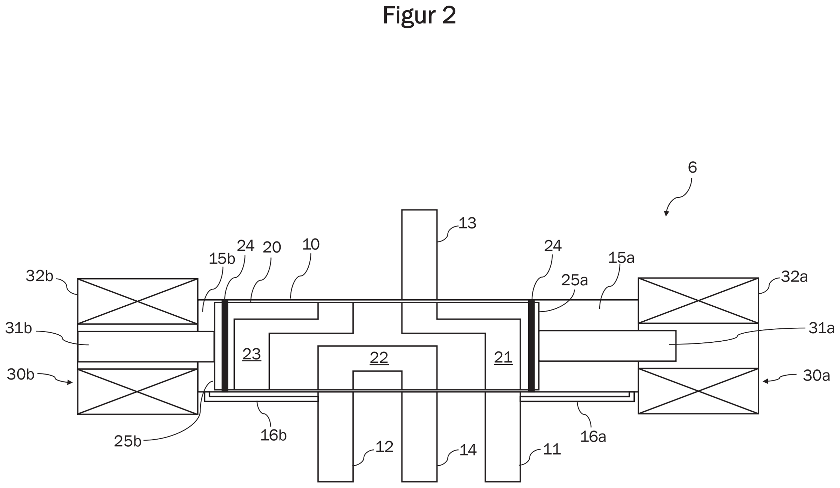

Figur 2 zeigt ein Ausführungsbeispiel eines solchen Wegeventils 6 in einer schematischen Längsschnittdarstellung. Das Wegeventil 6 umfasst ein Ventilgehäuse 10 mit vier Anschlüssen 11, 12, 13, 14, in dem ein Ventilschieber 20 mit drei Strömungskanälen 21, 22, 23 axial beweglich angeordnet ist. Jeder der vier Anschlüsse weist eine Öffnung auf, durch die Kältemittel in das Ventilgehäuse 10 bzw. in die Strömungskanäle 21, 22, 23 des Ventilschiebers 20 gelangen kann. Der Ventilschieber 20 ist vorliegend als Kolbenschieber ausgeführt und das Ventilgehäuse 10 weist in seinem Inneren einen Zylinder auf, in dem sich der Ventilschieber 20 hin und her bewegen kann.

Der erster Anschluss 11 kann vorliegend, wie in Figur 1 gezeigt, mit dem zweiten Wärmeübertrager 3 und der zweite Anschluss 12 kann mit dem ersten Wärmeübertrager 1 des Kältemittelkreislaufs 100 verbunden sein. Der dritte Anschluss 13 kann wiederum gemäß Figur 1 mit dem Ausgang bzw. der Druckseite und der vierter Anschluss 14 kann mit dem Eingang bzw. der Saugseite des Kompressors 2 verbunden sein. Der dritte und der vierte Anschluss 13, 14 sind radial gegenüberliegend auf einer äußeren Oberfläche des Ventilgehäuses 10 angeordnet, und der erste und zweite Anschluss 11, 12 sind auf der äußeren Oberfläche des Ventilgehäuses 10 axial neben dem vierten Anschluss 14 angeordnet, wobei sich der vierte Anschluss 14 zwischen dem ersten und zweiten Anschluss 11, 12 befindet.

Von den drei Strömungskanälen 21, 22, 23 des Ventilschiebers 20 dienen zwei Strömungskanäle 21, 23 dazu, den ersten bzw. zweiten Wärmeübertrager 1, 3 mit der Druckseite des Kompressors 2 (Hochdruckseite der Wärmepumpe) zu verbinden, während ein Strömungskanal 22 dazu genutzt wird, den anderen der beiden Wärmeübertrager 1, 3 mit der Saugseite des Kompressors 2 (Niederdruckseite der Wärmepumpe) zu verbinden.

An beiden Stirnseiten des Ventilgehäuses 10 ist vorliegend ein erster Elektromagnet 30a und ein zweiter Elektromagnet 30b mit jeweils einer Magnetspule 32a, 32b und einem Magnetanker 31a, 31b angebracht. Der Magnetanker 31a, 31b jedes Elektromagneten 30a, 30b grenzt dabei jeweils an eine Stirnseite 25a, 25b des Ventilschiebers 20 an und ist mit diesem mechanisch wirkverbunden. Mittels des ersten Elektromagneten 30a kann der Ventilschieber 20 in die erste Stellung bewegt werden, und mittels des zweiten Elektromagneten 30b (Umschaltelement) kann der Ventilschieber 20 in die zweite Stellung bewegt werden.

Außerdem ist angrenzend an eine erste Stirnseite 25a des Ventilschiebers 20 eine erste Kammer 15a und angrenzend an eine zweite Stirnseite 25b des Ventilschiebers 20 eine zweite Kammer 15b in dem Ventilgehäuse 10 ausgebildet. Die erste Kammer 15a ist mittels einer ersten Leitung 16a mit dem ersten Anschluss 11 verbunden, und die zweite Kammer ist mittels einer zweiten Leitung 16b mit dem zweiten Anschluss 12 verbunden. Die beiden Leitungen 16a, 16b sind vorliegend als Kapillarrohre ausgeführt. Auf diese Weise wird die erste Stirnseite 25a des Ventilschiebers 20 mit einem Druck beaufschlagt, der an dem ersten Anschluss 11 des Ventilgehäuses 10 anliegt und die zweite Stirnseite 25b des Ventilschiebers 20 wird mit einem Druck beaufschlagt, der an dem zweiten Anschluss 12 des Ventilgehäuses 10 anliegt. Anschließend an die beiden Stirnseiten 25a, 25b des Ventilschiebers 20 ist auf dessen Umfang jeweils eine Dichtung 24 angebracht, welche die erste bzw. die zweite Kammer 15a, 15b in dem Ventilgehäuse 10 abdichtet.

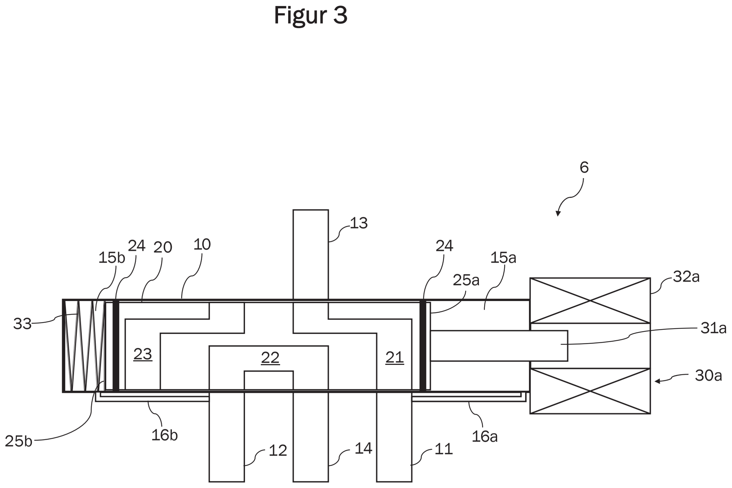

In Figur 3 ist in einer schematischen Längsschnittdarstellung ein weiteres Ausführungsbeispiel des Wegeventils 6 gezeigt, das sich von dem in Figur 2 dargestellten lediglich durch die Ausgestaltung des Umschaltelements unterscheidet. Anstelle des zweiten Elektromagneten 30b ist angrenzend an die zweite Stirnseite 25b des Ventilschiebers 20 eine Feder 33 in der zweiten Kammer 15b des Ventilgehäuses 10 angeordnet. Diese kann den Ventilschieber 20 aus der ersten Stellung in die zweite Stellung bewegen, wenn der erste Elektromagnet 30a ausgeschaltet und eine Druckkraft, die in der ersten Kammer 15a auf die erste Stirnfläche 25a des Ventilschiebers 20 wirkt, kleiner als eine Federkraft der Feder 33 ist. Es versteht sich, dass die Federkraft zusätzlich eine Reibkraft zwischen dem Ventilschieber 20 und dem Ventilgehäuse 10 überwinden muss, die hier und im Folgenden als vernachlässigbar angenommen wird.

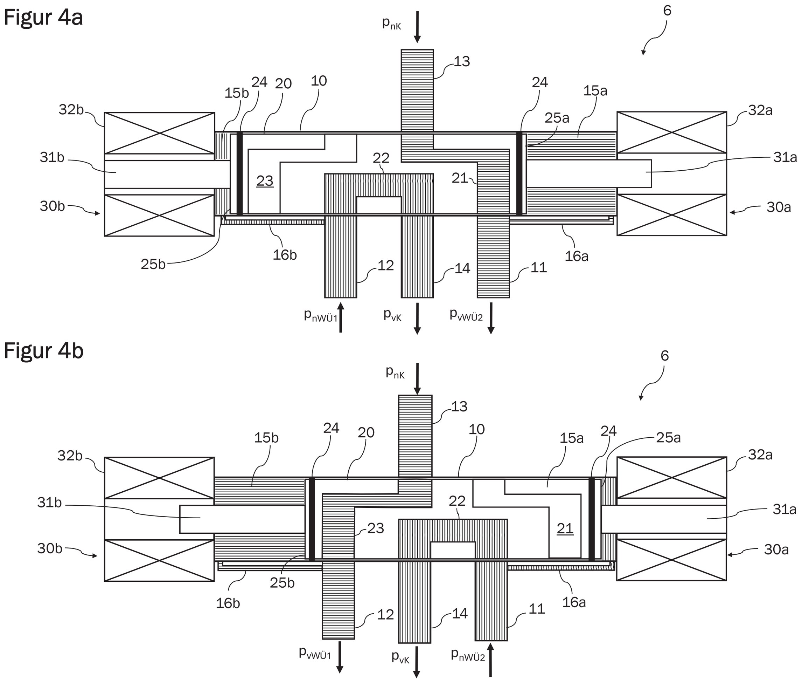

Eine Funktion des in den Figuren 2 und 3 gezeigten Wegeventils 6 wird nachfolgend in Verbindung mit den Figuren 4a und 4b näher erläutert. Dabei zeigt Figur 4a einen Strömungsverlauf durch das Wegeventil 6 aus Figur 2, wenn sich der Ventilschieber 20 in der ersten Stellung befindet, in welcher der erste Wärmeübertrager 1 als Verdampfer und der zweite Wärmeübertrager 3 als Kondensator arbeitet, und Figur 4b zeigt schematisch einen Strömungsverlauf durch das Wegeventil 6 aus Figur 2, wenn sich der Ventilschieber 20 in der zweiten Stellung befindet, in welcher der erste Wärmeübertrager 1 als Kondensator und der zweite Wärmeübertrager 3 als Verdampfer arbeitet. Zur Verdeutlichung der Druckverhältnisse in dem Wegeventil 6 sind in beiden Figuren alle Bereiche in denen Niederdruck herrscht mit einer senkrechten Schraffur und alle Bereiche in denen Hochdruck herrscht mit einer waagrechten Schraffur versehen.

Um den Ventilschieber 20 in die in Figur 4a dargestellte erste Stellung zu bewegen, kann die Magnetspule 32a des ersten Elektromagneten 30a bestromt werden, wodurch dessen Magnetanker 31a abgestoßen wird, sich dadurch nach links bewegt und den angrenzenden Ventilschieber 20 so lange verschiebt bis ein Querschnitt des ersten Strömungskanals 21 vollständig von den Öffnungen des ersten und dritten Anschlusses 11, 13 und ein Querschnitt des zweiten Strömungskanals 22 vollständig von den Öffnungen des zweiten und vierten Anschlusses 12, 14 freigegeben ist. In einer bevorzugten Ausführungsform kann eine Wirkrichtung der Magnetanker 31a, 31b umgekehrt sein, d.h. die Magnetanker 31a, 31b können bei Bestromung der Magnetspulen 32a, 32b von diesen angezogen werden. In diesem Fall kann die Magnetspule 32b des zweiten Elektromagneten 30b bestromt werden und dessen Magnetanker 31b nach links bewegt werden, um den Ventilschieber 20 in die oben beschriebene Stellung zu bewegen. Die Magnetanker 31a, 31b können dazu mechanisch mit dem Ventilschieber 20 verbunden sein, z.B. mittels einer Verschraubung oder einer Verschweißung. Es ist ebenso möglich, dass die Magnetanker 31a, 31b und der Ventilschieber 20 einstückig ausgeführt sind.

In dieser ersten Stellung des Ventilschiebers 20 strömt Kältemittel von dem ersten Wärmeübertrager 1 durch den zweiten Strömungskanal 22 des Ventilschiebers 20 zur Saugseite des Kompressors 2 und Kältemittel von der Druckseite des Kompressors 2 durch den ersten Strömungskanal 21 des Ventilschiebers 20 zu dem zweiten Wärmeübertrager 3. Somit liegt an dem zweiten Anschluss 12 ein Druck p_{nWÜ1} an, der im Wesentlichen einem Druck p_{vK} auf der Saugseite des Kompressors 2 (Niederdruck) entspricht, mit dem das Kältemittel über den vierten Anschluss 14 aus dem zweiten Strömungskanal 22 austritt. An dem ersten Anschluss 11 liegt in der ersten Stellung ein Druck p_{vWÜ2} an, der im Wesentlichen einem Druck p_{nK} auf der Druckseite des Kompressor 2 (Hochdruck) entspricht, mit dem das Kältemittel über den dritten Anschluss 13 in den ersten Strömungskanal 21 eintritt. Ein Querschnitt des dritte Strömungskanals 23 des Ventilschiebers 20 ist in dessen erster Stellung durch das Ventilgehäuse 10 verschlossen und wird folglich nicht von Kältemittel durchströmt.

Da der erste Anschluss 11 über die erste Leitung 16a mit der ersten Kammer 15a und der zweite Anschluss 12 über die zweite Leitung 16b mit der zweiten Kammer 15b verbunden ist, liegt auch in der ersten Kammer 15a ein Hochdruck und in der zweiten Kammer 15b ein Niederdruck an, wenn sich der Ventilschieber 20 in der in Figur 4a gezeigten ersten Stellung befindet.

Es wird deutlich, dass der Ventilschieber 20 allein durch das Druckgefälle zwischen der ersten und zweiten Kammer 15a, 15b in der ersten Stellung gehalten wird. Demzufolge ist eine Bestromung der Magnetspule 32a des ersten Elektromagneten 30a nur zur Bewegung des Ventilschiebers 20 in die erste Stellung notwendig und kann abgeschaltet werden sobald der Ventilschieber 20 diese erreicht hat.

Um den Ventilschieber 20 aus der ersten Stellung in die zweite Stellung zu verschieben, kann die Magnetspule 32b des zweiten Elektromagneten 30b bestromt werden, wodurch sich dessen Magnetanker 31b vorliegend nach rechts bewegt und den angrenzenden Ventilschieber 20 so lange verschiebt bis ein Querschnitt des ersten Strömungskanals 21 vollständig die Öffnungen des ersten und dritten Anschlusses 11, 13 überdeckt und ein Querschnitt des zweiten Strömungskanals 22 vollständig die Öffnungen des zweiten und vierten Anschlusses 12, 14 überdeckt. Wenn eine umgekehrte Wirkrichtung der Magnetanker 31a, 31b vorliegt, so kann die Magnetspule 32a des ersten Elektromagneten 30a bestromt werden, um dessen Magnetanker 31a nach rechts zu bewegen, wodurch der mit den Magnetankern 31a, 31b mechanisch verbundene Ventilschieber 20 in die zweite Stellung verschoben wird. Alternativ kann die in Figur 3 gezeigte Feder 3 die Verschiebung des Ventilschiebers 20 von der ersten in die zweite Stellung bewirken, nachdem der Hochdruck in der ersten Kammer 15a abgesenkt wurde.

In der zweiten Stellung des Ventilschiebers 20 ist die Strömungsrichtung in dem Kältemittelkreislauf 100 umgekehrt und es strömt Kältemittel von dem zweiten Wärmeübertrager 3 durch den zweiten Strömungskanal 22 des Ventilschiebers 20 zur Saugseite des Kompressors 2 und Kältemittel von der Druckseite des Kompressors 2 durch den dritten Strömungskanal 23 des Ventilschiebers 20 zu dem ersten Wärmeübertrager 1. Somit liegt an dem zweiten Anschluss 12 ein Druck p_{vWÜ1} an, der im Wesentlichen einem Druck p_{nK} auf der Druckseite des Kompressors 2 (Hochdruck) entspricht, mit dem das Kältemittel über den dritten Anschluss 13 in den dritten Strömungskanal 23 eintritt. An dem ersten Anschluss 11 liegt in der zweiten Stellung ein Druck p_{nWÜ2} an, der im Wesentlichen einem Druck p_{vK} auf der Saugseite des Kompressor 2 (Niederdruck) entspricht, mit dem das Kältemittel über den vierten Anschluss 14 aus dem zweiten Strömungskanal 22 austritt. Ein Querschnitt des ersten Strömungskanals 21 des Ventilschiebers 20 ist in dessen zweiter Stellung durch das Ventilgehäuse 10 verschlossen und wird folglich nicht von Kältemittel durchströmt.

Da der erste Anschluss 11 über die erste Leitung 16a mit der ersten Kammer 15a und der zweite Anschluss 12 über die zweite Leitung 16b mit der zweiten Kammer 15b verbunden ist, liegt nun in der ersten Kammer 15a ein Niederdruck und in der zweiten Kammer 15b ein Hochdruck an. Folglich wird der Ventilschieber 20 in diesem Fall durch das Druckgefälle zwischen der zweiten und der ersten Kammer 15b, 15a in der zweiten Stellung gehalten und der zweite Elektromagnet 30b kann abgeschaltet werden sobald der Ventilschieber 20 diese erreicht hat. Wenn anstelle des zweiten Elektromagneten 30b eine Feder 33 als Umschaltelement verwendet wird, so ist deren Federkraft ebenfalls nur für den Verstellweg des Ventilschiebers 20 erforderlich, da das Druckgefälle zwischen den beiden Kammern den Ventilschieber 20 nachfolgend in der zweiten Stellung hält. Insbesondere kann die Federkraft bereits während des Verstellvorgangs durch eine Druckkraft in der zweiten Kammer 15b unterstützt werden, sobald ein Teil des Querschnitts des dritten Strömungskanals 23 von den Öffnungen des zweiten und dritten Anschlusses 12, 13 freigegeben wird.

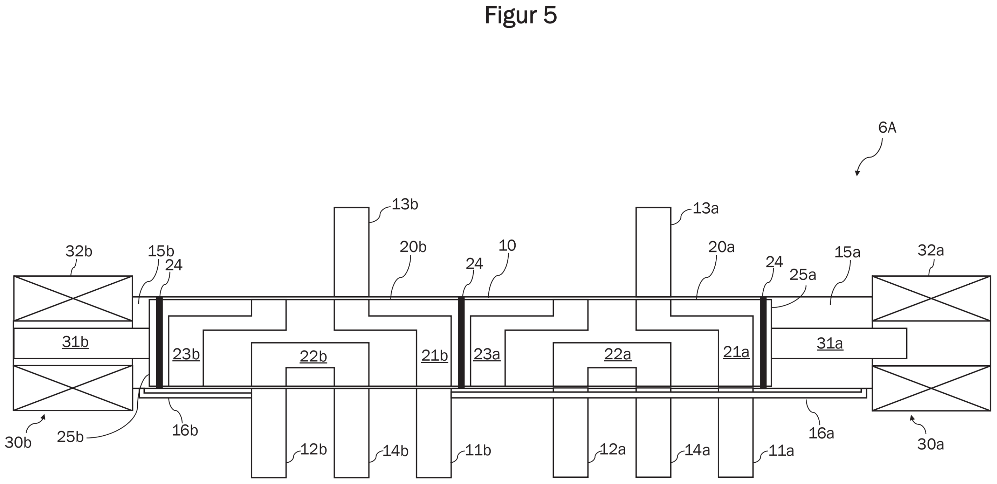

Figur 5 zeigt schematisch ein Wegeventil 6A gemäß einem weiteren Ausführungsbeispiel der Erfindung in einer schematischen Längsschnittdarstellung. Das Wegeventil 6A umfasst ein Ventilgehäuse 10 in dem zwei Ventilschieber 20a, 20b mit jeweils drei Strömungskanäle 21a - 23a, 21b - 23b axial beweglich angeordnet sind. Dementsprechend sind auf der äußeren Oberfläche des Ventilgehäuses 10 in diesem Fall acht Anschlüsse 11a - 14a, 11b - 14b angeordnet, von denen vier Anschlüsse 11a - 14a einer ersten Ventilschieber 20a und weitere vier Anschlüsse 11b - 14b einem zweiten Ventilschieber 20b zugeordnet sind. Die Ventilschieber 20a, 20b sind baugleich und identisch zu dem in Figur 2 gezeigten Ventilschieber 20 ausgeführt. Sie grenzen an jeweils einer ihrer Stirnseiten aneinander an und sind in dem gezeigten Längsschnitt des Wegeventils 6A nebeneinander angeordnet. Insbesondere sind die beiden Ventilschieber 20a, 20b vorliegend als ein Bauteil ausgeführt, wobei auf einem Umfang zwischen dem ersten Ventilschieber 20a und dem zweiten Ventilschieber 20b eine zusätzliche Dichtung 24 angebracht ist, welche deren Strömungskanäle 21a - 23a, 21b - 23b fluidisch voneinander trennt.

Mittels des Wegeventils 6A kann beispielsweise die Strömungsrichtung in einem Kältemittelkreislauf 100 mit zweistufiger Verdichtung und Zwischenkühlung umgekehrt werden. Insbesondere kann das Wegeventil 6A dazu genutzt werden, einen Kältemittelkreislauf wie in EP 24 15 4257 beschrieben umzukehren.

Im Falle eines Kältemittelkreislaufs mit zweistufiger Verdichtung und Zwischenkühlung kann ein erster Anschluss 11b des zweiten Ventilschiebers 20b mit dem zweiten Wärmeübertrager 3 und ein zweiter Anschluss 12b des zweiten Ventilschiebers 20b mit dem ersten Wärmeübertrager 1 des Kältemittelkreislaufs 100 verbunden sein. Ein dritter Anschluss 13b des zweiten Ventilschiebers 20b kann mit einem Ausgang bzw. einer Druckseite eines zweiten Kompressors (nicht dargestellt) und ein vierter Anschluss 14b des zweiten Ventilschiebers 20b kann mit einem Eingang bzw. einer Saugseite eines ersten Kompressors (nicht dargestellt) verbunden sein.

Ein erster Eingang 11a des ersten Ventilschiebers 20a kann in diesem Fall mit einem ersten Anschluss eines dritten Wärmeübertragers (nicht dargestellt) und ein zweiter Anschluss 12a des ersten Ventilschiebers 20a kann mit einem zweiten Anschluss des dritten Wärmeübertragers verbunden sein. Der dritte Wärmeübertrager kann zur Zwischenkühlung des Kältemittels zwischen dem ersten und zweiten Kompressor angeordnet sein. Ein dritter Anschluss 13a des ersten Ventilschiebers 20a kann mit einem Eingang bzw. einer Saugseite des zweiten Kompressors und ein vierter Anschluss 14a des ersten Ventilschiebers 20b kann mit einem Ausgang bzw. einer Druckseite des ersten Kompressors verbunden sein.

Von den drei Strömungskanälen 21b - 23b des zweiten Ventilschiebers 10b dienen im Falle einer zweistufigen Verdichtung mit Zwischenkühlung zwei Strömungskanäle 21b, 23b dazu, den ersten bzw. zweiten Wärmeübertrager 1, 3 mit der Druckseite des zweiten Kompressors (Hochdruckseite der Wärmepumpe) zu verbinden, während ein Strömungskanal 22b dazu genutzt wird, den anderen der beiden Wärmeübertrager 1, 3 mit der Saugseite des ersten Kompressors (Niederdruckseite der Wärmepumpe) zu verbinden.

Von den drei Strömungskanälen 21a - 23a des ersten Ventilschiebers 10b dienen in diesem Fall zwei Strömungskanäle 21a, 23a dazu, den ersten bzw. zweiten Anschluss des dritten Wärmeübertragers mit der Saugseite des zweiten Kompressors zu verbinden, während ein Strömungskanal 22b dazu genutzt wird, den anderen der beiden Anschlüsse des dritten Wärmeübertragers mit der Druckseite des ersten Kompressors zu verbinden.

An beiden Stirnseiten des Ventilgehäuses 10 ist analog zu dem in Figur 2 gezeigten Wegeventil 6 ein erster und zweiter Elektromagnet 30a, 30b mit jeweils einer Magnetspule 32a, 32b und einem Magnetanker 31a, 31b angebracht. Der Magnetanker 31a des ersten Elektromagneten 30a grenzt dabei jeweils an eine erste Stirnseite 25a des ersten Ventilschiebers 20a und der Magnetanker 31b des zweiten Elektromagneten grenzt an eine zweite Stirnseite 25b des zweiten Ventilschiebers 20b an. Auf diese Weise sind der erste und zweite Magnetanker 31a, 31b mit den als gemeinsames Bauteil ausführten Ventilschiebern 20a, 20b mechanisch wirkverbunden. Mittels des ersten Elektromagneten 30a können die beiden Ventilschieber 20a, 20b gemeinsam in die erste Stellung bewegt werden, und mittels des zweiten Elektromagneten 30b (Umschaltelement) können die beiden Ventilschieber 20a, 20b gemeinsam in die zweite Stellung bewegt werden.

In dem Wegeventil 6A grenzt die erste Kammer 15a in dem Ventilgehäuse 10 an die erste Stirnseite 25a des ersten Ventilschiebers 20a an, und die zweite Kammer 15b grenzt an die zweite Stirnseite 25b des zweiten Ventilschiebers 20b an. Die erste Kammer 15a ist vorliegend mittels der ersten Leitung 16a mit dem ersten Anschluss 11b des zweiten Ventilschiebers 20b verbunden, und die zweite Kammer 15b ist mittels der zweiten Leitung 16b mit dem zweiten Anschluss 12b des zweiten Ventilschiebers 20b verbunden. Auf diese Weise werden bei dem Wegeventil 6A die beiden Ventilschieber 20a, 20b gemeinsam in der ersten bzw. zweiten Stellung gehalten, in denen jeweils ein Druckgefälle zwischen den beiden Kammern 15a, 15b herrscht.

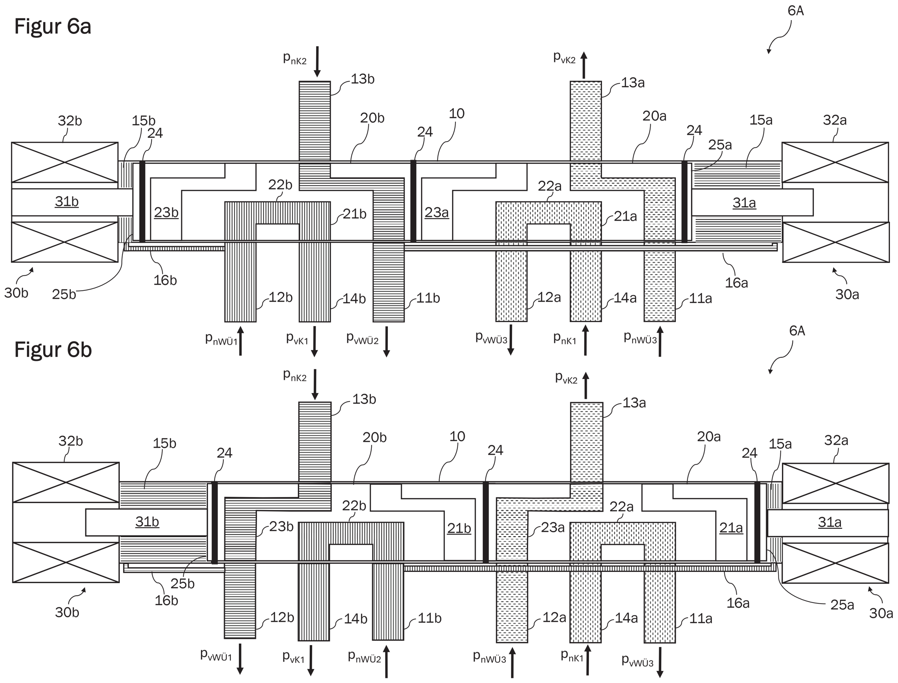

Eine Funktion des in Figur 5 gezeigten Wegeventils 6A wird nachfolgend in Verbindung mit den Figuren 6a und 6b für einen Kältemittelkreislauf 100 mit zweistufiger Verdichtung und Zwischenkühlung, an den das Wegeventil 6A wie oben beschrieben angeschlossen ist, erläutert.

Wie bereits oben beschrieben, kann ein solcher Kältemittelkreislauf 100 neben den in Figur 1 dargestellten Elementen einen ersten und einen zweiten Kompressor (nicht dargestellt) sowie einen dritten Wärmeübertrager (nicht dargestellt), der zwischen dem ersten und zweiten Kompressor angeordnet ist, umfassen. Mittels des ersten Kompressors kann das Kältemittel auf einen mittleren Druck verdichtet und in dem dritten Wärmeübertrager zwischengekühlt werden. Dadurch gelangt das Kältemittel mit einer niedrigeren Temperatur in dem zweiten Kompressor, in dem es vor Eintritt in den jeweils als Kondensator arbeitenden Wärmeübertrager 1, 3 auf den gewünschten Hochdruck verdichtet wird. Auf diese Weise kann eine zu hohe Temperatur nach vollständiger Verdichtung des Kältemittels vermieden und ein Wirkungsgrad der Verdichtung verbessert werden.

Insbesondere zeigt Figur 6a Strömungsverläufe durch das Wegeventil 6 aus Figur 5, wenn sich der Ventilschieber 20 in der ersten Stellung befindet, in welcher der erste Wärmeübertrager 1 als Verdampfer und der zweite Wärmeübertrager 3 als Kondensator arbeitet, und Figur 6b zeigt schematisch Strömungsverläufe durch das Wegeventil 6 aus Figur 5, wenn sich der Ventilschieber 20 in der zweiten Stellung befindet, in welcher der erste Wärmeübertrager 1 als Kondensator und der zweite Wärmeübertrager 3 als Verdampfer arbeitet.

Zur Verdeutlichung der Druckverhältnisse in dem Wegeventil 6 sind in beiden Figuren alle Bereiche in denen Niederdruck (Druck am Eingang des ersten Kompressors) herrscht mit einer senkrechten Schraffur und alle Bereiche in denen Hochdruck (Druck am Ausgang des zweiten Kompressors) herrscht mit einer waagrechten Schraffur versehen. Zusätzlich ist der Strömungskanal 22a des ersten Ventilschiebers 20a, durch den das Kältemittel mit dem mittlerem Druck von dem ersten Kompressor zu dem dritten Wärmeübertrager fließt, mit einer gestrichelten senkrechten Schraffur und die Strömungskanäle 21a, 23a des ersten Ventilschiebers 20a, durch die das Kältemittel mit dem mittlerem Druck von dem dritten Wärmeübertrager zu dem zweiten Kompressor fließt, mit einer gestrichelten waagrechten Schraffur versehen.

Um die beiden Ventilschieber 20a, 20b in die in Figur 6a dargestellte erste Stellung zu bewegen, kann die Magnetspule 32a des ersten Elektromagneten 30a bestromt werden, wodurch dessen Magnetanker 31a abgestoßen wird, sich dadurch nach links bewegt und die angrenzenden Ventilschieber 20a, 20b verschiebt bis deren erste Strömungskanäle 21a, 21b vollständig durch die Öffnungen der ersten und dritten Anschlüsse 11a, 11b, 13a, 13b und deren zweite Strömungskanäle 22a, 22b vollständig durch die Öffnungen der zweiten und vierten Anschlüsse 12a, 12b, 14a, 14b des jeweiligen Ventilschiebers 20a, 20b freigegeben sind. Die dritten Strömungskanäle 23a, 23b der beiden Ventilschieber 20a, 20b sind in der erster Stellung durch das Ventilgehäuse 10 verschlossen. In einer bevorzugten Ausführungsform kann eine Wirkrichtung der Magnetanker 31a, 31b umgekehrt sein, d.h. die Magnetanker 31a, 31b können bei Bestromung der Magnetspulen 32a, 32b von diesen angezogen werden. In diesem Fall kann die Magnetspule 32b des zweiten Elektromagneten 30b bestromt werden und dessen Magnetanker 31b nach links bewegt werden, um die Ventilschieber 20a, 20b in die oben beschriebene Stellung zu bewegen. Die Magnetanker 31a, 31b können dazu mechanisch mit den Ventilschiebern 20a, 20b verbunden sein, z.B. mittels einer Verschraubung oder einer Verschweißung. Es ist ebenso möglich, dass die Magnetanker 31a, 31b und die Ventilschieber 20a, 20b einstückig ausgeführt sind.

In dieser ersten Stellung der Ventilschieber 20a, 20b strömt Kältemittel von dem ersten Wärmeübertrager 1 durch den zweiten Strömungskanal 22b des zweiten Ventilschiebers 20b zur Saugseite des ersten Kompressors und Kältemittel von der Druckseite des zweiten Kompressors durch den ersten Strömungskanal 21b des zweiten Ventilschiebers 20b zu dem zweiten Wärmeübertrager 3. Somit entsprechen die an den Anschlüssen 11b - 14b anliegenden Drücke denen in Figur 4a erläuterten und werden an dieser Stelle nicht nochmals beschrieben. Des Weiteren strömt Kältemittel von der Druckseite des ersten Kompressors über den zweiten Strömungskanal 22a des ersten Ventilschiebers 20a zu dem dritten Wärmeübertrager und Kältemittel von dem dritten Wärmeübertrager über den ersten Strömungskanal 21a des ersten Ventilschiebers zur Saugseite des zweiten Kompressors. Ein Druck p_{WÜ3}, p_{vK2}, an dem ersten, zweiten und dritten Anschluss 11a, 12a, 13a des ersten Ventilschiebers 20a entspricht im Wesentlichen einem Druck p_{nK1}, der auf der Druckseite des ersten Kompressors anliegt, mit welcher der vierte Anschluss 14a des ersten Ventilschiebers 20a verbunden ist (mittlerer Druck p_{nK1}=p_{WÜ3}=p_{vK2}).

Da der erste Anschluss 11b des zweiten Ventilschiebers 20b über die erste Leitung 16a mit der ersten Kammer 15a und der zweite Anschluss 12b des zweiten Ventilschiebers 20b über die zweite Leitung 16b mit der zweiten Kammer 15b verbunden ist, liegt ein Druckgefälle zwischen der ersten und zweiten Kammer 15a, 15b vor, das die als gemeinsames Bauteil ausgeführten Ventilschieber 20a, 20b in der ersten Stellung hält, auch wenn der erste Elektromagnet 30a ausgeschaltet wird.

Um die Ventilschieber 20a, 20b aus der ersten Stellung in die zweite Stellung zu verschieben, kann die Magnetspule 32b des zweiten Elektromagneten 30b bestromt werden, wodurch sich dessen Magnetanker 31b vorliegend nach rechts bewegt und die angrenzenden Ventilschieber 20a, 20b so lange verschiebt bis deren dritte Strömungskanäle 23a, 23b vollständig durch die Öffnungen der zweiten und dritten Anschlüsse 12a, 12b, 13a, 13b und deren zweite Strömungskanäle 22a, 22b vollständig durch die Öffnungen der ersten und vierten Anschlüsse 11a, 11b, 14a, 14b des jeweiligen Ventilschiebers 20a, 20b freigegeben sind. Wenn eine umgekehrte Wirkrichtung der Magnetanker 31a, 31b vorliegt, so kann die Magnetspule 32a des ersten Elektromagneten 30a bestromt werden, um dessen Magnetanker 31a nach rechts zu bewegen, wodurch der mit dem Magnetanker mechanisch verbundene Ventilschieber 20a, 20b in die zweite Stellung verschoben wird. Alternativ kann die in Figur 3 gezeigte Feder 3 die Verschiebung der Ventilschieber 20a, 20b von der ersten in die zweite Stellung bewirken, nachdem der Hochdruck in der ersten Kammer 15a abgesenkt wurde. Die ersten Strömungskanäle 21a, 21b der beiden Ventilschieber 20a, 20b sind in der erster Stellung durch das Ventilgehäuse 10 verschlossen.

In der zweiten Stellung der Ventilschieber 20a, 20b ist die Strömungsrichtung in dem Kältemittelkreislauf 100 umgekehrt und es strömt Kältemittel von dem zweiten Wärmeübertrager 3 durch den zweiten Strömungskanal 22b des zweiten Ventilschiebers 20b zur Saugseite des ersten Kompressors und Kältemittel von der Druckseite des zweiten Kompressors durch den dritten Strömungskanal 23b des zweiten Ventilschiebers 20b zu dem ersten Wärmeübertrager 1. Somit entsprechen die an den Anschlüssen 11b - 14b anliegenden Drücke denen in Figur 4b erläuterten und werden an dieser Stelle nicht nochmals beschrieben.

Des Weiteren strömt Kältemittel von der Druckseite des ersten Kompressors über den zweiten Strömungskanal 22a des ersten Ventilschiebers 20a zu dem dritten Wärmeübertrager, wobei sich eine Strömungsrichtung in dem zweiten Strömungskanal 22a im Vergleich zur ersten Stellung der Ventilschieber 20a, 20b umkehrt. Zudem strömt Kältemittel von dem dritten Wärmeübertrager über den dritten Strömungskanal 23a des ersten Ventilschiebers 20a zur Saugseite des zweiten Kompressors. Ein Druck p_{WÜ3}, p_{vK2}, an dem ersten, zweiten und dritten Anschluss 11a, 12a, 13a des ersten Ventilschiebers 20a entspricht auch hier im Wesentlichen einem Druck p_{nK1}, der auf der Druckseite des ersten Kompressors anliegt, mit welcher der vierte Anschluss 14a des ersten Ventilschiebers 20a verbunden ist (mittlerer Druck p_{nK1}=p_{WÜ3}=p_{vK2}).

Da der erste Anschluss 11 über die erste Leitung 16a mit der ersten Kammer 15a und der zweite Anschluss 12 über die zweite Leitung 16b mit der zweiten Kammer 15b verbunden ist, liegt nun ein Druckgefälle zwischen der zweiten und der ersten Kammer 15b, 15a vor, das die als gemeinsames Bauteil ausgeführten Ventilschieber 20a, 20b in der zweiten Stellung hält, auch wenn der zweite Elektromagnet 30b ausgeschaltet wird. Wenn anstelle des zweiten Elektromagneten 30b eine Feder 33 als Umschaltelement verwendet wird, so ist deren Federkraft ebenfalls nur für den Verstellweg der Ventilschieber 20a, 20b erforderlich, da das Druckgefälle zwischen den beiden Kammern 15a, 15b diese nachfolgend in der zweiten Stellung hält. Insbesondere kann die Federkraft bereits während des Verstellvorgangs durch eine Druckkraft in der zweiten Kammer 15b unterstützt werden, sobald ein Teil eines Querschnitts des dritten Strömungskanals 23b in dem zweiten Ventilschieber 20b von den Öffnungen des zweiten und dritten Anschlusses 12b, 13b freigegeben wird.

Anhand der beschriebenen Ausführungsbespiele wird deutlich, dass mittels des Wegeventils 6, 6A eine Kältemittelkreislaufumkehr in einer Wärmepumpe zuverlässig und effizient erfolgen kann. Insbesondere kann die Kältemittelkreislaufumkehr auch bei stillstehendem Kompressor 2 erfolgen, da für die Verstellung des Ventilschiebers 20, 20a, 20b kein Kältemitteldruck erforderlich ist. Der Einsatz von zwei Ventilschiebern 20a, 20b in einem Ventilgehäuse 10 ermöglicht es zudem, mehrere Umschaltfunktionen mit nur einem Wegeventil 6A darzustellen.

## Patentansprüche

1. Wegeventil (6) für eine Wärmepumpe zum Heizen und Kühlen eines Gebäudes, umfassend
- ein Ventilgehäuse (10) mit einer Vielzahl von Anschlüssen (11, 12, 13, 14);
- einen Ventilschieber (20) mit einer Vielzahl von Strömungskanälen (21, 22, 23), der axial beweglich in dem Ventilgehäuse (10) angeordnet ist;
- mindestens einen Elektromagneten (30a) mit einem Magnetanker (31a), der mit dem Ventilschieber (20) mechanisch wirkverbunden ist, wobei der Elektromagnet (30a) dazu eingerichtet ist, den Ventilschieber (20) in eine erste Stellung zu bewegen;
- ein Umschaltelement, das dazu eingerichtet ist, den Ventilschieber (20) in eine zweite Stellung zu bewegen;
- eine erste Leitung (16a), die eine erste Kammer (15a), welche angrenzend an eine erste Stirnseite (25a) des Ventilschiebers (20) in dem Ventilgehäuse (10) ausgebildet ist, mit einem ersten Anschluss (11) des Ventilgehäuses (10) verbindet; und
- eine zweite Leitung (16b), die eine zweite Kammer (15b), welche angrenzend an eine zweite Stirnseite (25b) des Ventilschiebers (20) in dem Ventilgehäuse (10) ausgebildet ist, mit einem zweiten Anschluss (12) des Ventilgehäuses verbindet.

2. Wegeventil (6) nach Anspruch 1, wobei ein dritter Anschluss (13) des Ventilgehäuses (10) mit einer Hochdruckseite und ein vierter Anschluss (14) des Ventilgehäuses (10) mit einer Niederdruckseite der Wärmepumpe verbindbar ist.

3. Wegeventil (6) nach Anspruch 2, wobei der Ventilschieber (20) in der ersten Stellung dazu eingerichtet ist, den ersten Anschluss (11) des Ventilgehäuses (10) mit der Hochdruckseite und den zweiten Anschluss (12) des Ventilgehäuses (10) mit der Niederdruckseite der Wärmepumpe zu verbinden.

4. Wegeventil (6) nach Anspruch 3, wobei der Ventilschieber (20) in der zweiten Stellung dazu eingerichtet ist, den ersten Anschluss (11) des Ventilgehäuses (10) mit der Niederdruckseite und den zweiten Anschluss (12) des Ventilgehäuses (10) mit der Hochdruckseite der Wärmepumpe zu verbinden.

5. Wegeventil (6) nach mindestens einem der vorstehenden Ansprüche, wobei das Umschaltelement einen Elektromagneten (30b) oder mindestens eine Feder (33) umfasst.

6. Wegeventil (6) nach mindestens einem der vorstehenden Ansprüche, wobei der Ventilschieber (20) als Kolbenschieber ausgeführt ist.

7. Wegeventil (6) nach mindestens einem der vorstehenden Ansprüche, wobei der Ventilschieber (20) drei Strömungskanäle (21, 22, 23) aufweist.

8. Wegeventil (6) nach mindestens einem der vorstehenden Ansprüche, wobei an dem Ventilschieber (20) eine oder mehrere Dichtungen (24) angeordnet sind, welche die erste und zweite Kammer (15a, 15b) in dem Ventilgehäuse (10) abdichten.

9. Wegeventil (6A) nach mindestens einem der vorstehenden Ansprüche, wobei in dem Ventilgehäuse mindestens zwei Ventilschieber (20a, 20b) angeordnet sind.

10. Wegeventil (6A) nach Anspruch 9, wobei die mindestens zwei Ventilschieber (20a, 20b) eine gemeinsame Mittelachse aufweisen und jeweils mit einer ihrer Stirnseiten aneinander angrenzen.

11. Wegeventil (6A) nach Anspruch 9 oder 10, wobei die Strömungskanäle (21a - 23a, 21b - 23b) der mindestens zwei Ventilschieber (20a, 20b) mittels mindestens einer Dichtung (24) fluidisch voneinander getrennt sind.

12. Wegeventil (6A) nach mindestens einem der Ansprüche 9 bis 11, wobei die mindestens zwei Ventilschieber (20a, 20b) miteinander verbunden sind.

13. Wegeventil (6A) nach mindestens einem der Ansprüche 9 bis 12, wobei die mindestens zwei Ventilschieber (20a, 20b) dazu eingerichtet sind, von einem gemeinsamen Elektromagneten in die erste Stellung und von einem gemeinsamen Umschaltelement in die zweite Stellung bewegt zu werden.

14. Wegeventil (6A) nach mindestens einem der Ansprüche 9 bis 13, wobei die mindestens zwei Ventilschieber (20a, 20b) als ein gemeinsames Bauteil ausgeführt sind.

15. Verfahren zur Umkehrung einer Strömungsrichtung in einem Kältemittelkreislauf (100) einer Wärmepumpe zum Heizen und Kühlen eines Gebäudes mittels eines Wegeventils (6, 6A) nach mindestens einem der vorstehenden Ansprüche, umfassend die Schritte:
Aktivieren eines Elektromagneten (31a) oder eines Umschaltelements des Wegeventils (6, 6A), wenn ein Bedarf zur Strömungsrichtungsumkehr detektiert wird;
Deaktivieren des Elektromagneten (31a) oder des Umschaltelements, wenn sich ein Ventilschieber (20) des Wegeventils (6, 6A) in eine erste oder eine zweite Stellung bewegt hat.

16. Verfahren nach Anspruch 15, wobei der Elektromagnet (31a) oder das Umschaltelement bei Stillstand eines Kompressors (2) des Kältemittelkreislaufs (100) aktiviert wird, um den Ventilschieber (20) in die erste oder die zweite Stellung zu bewegen.

17. Wärmepumpe zum Heizen und Kühlen eines Gebäudes, umfassend mindestens einen Kältemittelkreislauf (100) mit einem ersten Wärmeübertrager (1), einem Kompressor (2), einem zweiten Wärmeübertrager (3), einem Expansionselement (5) und einem Wegeventil (6, 6A) nach einem der Ansprüche 1 bis 14.
